# EUROPEAN PATENT APPLICATION

(11) **EP 3 928 975 A1**
(43) Date of publication of application: **29.12.2021**
(21) Application number: 21182193.9
(22) Date of filing: 28.06.2021
(51) Int. Cl.: B32B 7/02, B32B 7/12, A01N 25/34

(54) **A PROTECTIVE COVER FOR A GALLEY WORK SURFACE**

(30) Priority: 26.06.2020 US 202063044713 P; 07.07.2020 US 202063048678 P
(71) Applicant: B/E Aerospace, Inc., Winston-Salem, NC 27105 (US)
(72) Inventor: TRACEY, Christopher, Langford, Biggleswade, SG18 9QJ (GB)
(74) Representative: Dehns

(57) **Abstract**

A protective work surface cover including at least a first layer (104) configured to attach to the work surface, at least a second layer (102) removeably attached to the first layer configured to be removed once used, and at least a third layer removeably attached to the second layer configured to be removed once used.

## Description

### Cross-Reference To Related Applications

This application claims priority to U.S. provisional application, 63/044,713 filed on June 26, 2020 and U.S. provisional application, 63/048,678 filed on July 07, 2020.

### Background

### Technological Field

The present disclosure relates generally to galley work surfaces, and more particularly to a multi-layer protective cover for a galley work surface.

### Description of Related Art

Aircraft personnel interact with each other and with passengers in extremely close quarters. Work surfaces are shares and touched by multiple people throughout the flight. The COVID-19 pandemic reiterated the threat of pathogen spread during the close quarters air travel. Currently stewards have to clean each surface multiple times after each person contacts the surface. This leads to added effort as well as overuse of potentially harmful cleaning agents which can cause skin irritation. Thus, there is a need in the art for improved work surface protection and disinfections methods. The present disclosure provides a solution for this need.

### Summary of the Invention

A protective work surface, such as an aircraft galley work surface working as a substrate, having a cover including a first layer meant to be attach to the work surface in question, at least a second layer removeably attached to the first layer configured to be removed once used, at least a third layer removeably attached to the second layer configured to be removed once used. Each of the second layer and the third layer can be a film. The first layer can be thicker than either the second layer or the third layer.

The first layer can include a different material or coating than the second or third layers. Each of the layers can be separated by an adhesive layer or by static electricity. The second and third layers can each include a portion free of adhesive to help peel the layers. Each of the layers can be an antibacterial coating. The second and third layers can each include a corner portion comprising a material different than a remaining portion of each of the first and second layer. Each of the layers can be transparent. The work surface can be metallic, such as aluminum or stainless steel.

The protective layer stack is placed on the work surface. After using one layer for removing, a top layer after use, and exposing a subsequent layer identical to the top layer. The top layer, and every subsequent layer can be peeled away. The protective layer stack can be coupled to the work surface using an adhesive or any other suitable coupling mechanism.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject disclosure appertains will readily understand how to make and use the devices and methods of the subject disclosure without undue experimentation, embodiments thereof will be described in detail herein below with reference to certain figures, wherein:
FIG. 1 is a perspective view of an exemplary embodiment of a galley working surface with a protective covering in place;
FIG. 2 is a side elevation view of the protective cover of FIG. 1 showing the individual layers; and
FIG. 3 is a top view of the protective cover of FIG. 1 showing the top layer being removed.

### Detailed Description

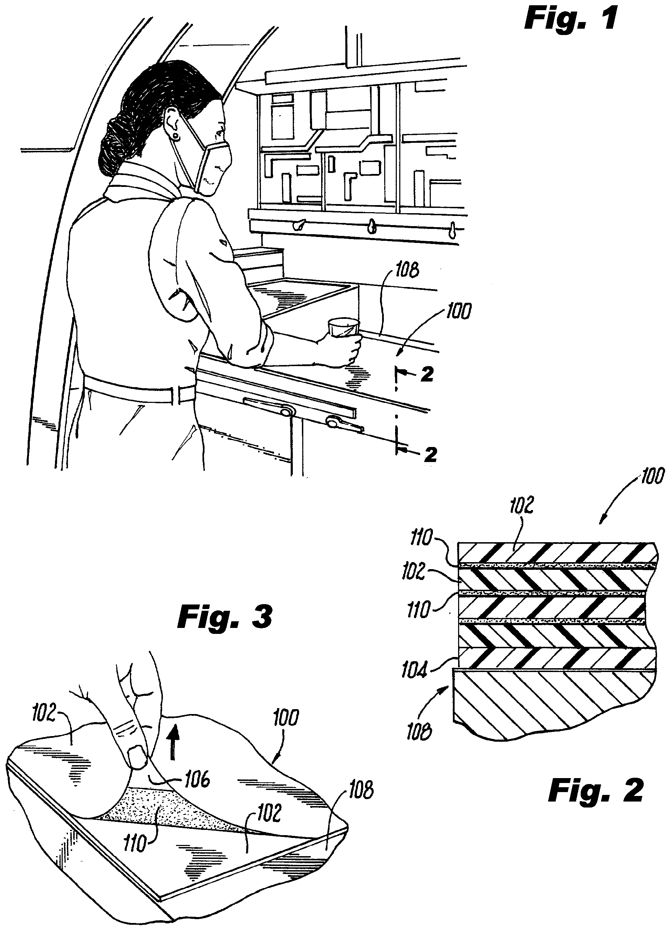

Reference will now be made to the drawings wherein like reference numerals identify similar structural features or aspects of the subject disclosure. For purposes of explanation and illustration, and not limitation, a partial view of an exemplary embodiment of a work surface protective covering in accordance with the disclosure is shown in FIG. 1 and is designated generally by reference character 100. Other embodiments of the work surface cover in accordance with the disclosure, or aspects thereof, are provided in FIGS. 2 and 3, as will be described. The protective cover, and methods of using such a cover described herein can be used for improving working conditions on aircraft, reducing the need to wiping down work surfaces, and reducing the potential for pathogen and disease spread.

Referring now to FIGS. 1-3 an aircraft galley has a work surface that is used for, among other things, meal prep. The surface has to be contacted by multiple people over the course of a flight and cleaned thoroughly between each use. The galley is shown here with a protective work surface covering 100 installed. The aircraft galley work surface acts a substrate 108. The surface covering 100 includes a first layer 104 that attaches to the work surface 108. The covering 100 includes a plurality layers 102 stacked on the first layer.

Referring now to Figs. 2 and 3, a simplified version of the stack is shown. The stack typically would have between 100 and 1000 film-like layers, where each layer is removeably attached to adjacent layer. Here three layers are shown on top of the base layer attached to the work surface. Each of the layers can be peeled away once they have been used.

Each of the layers except the bottom layer is a film, the layers being thinner than the base layer. A coating or an adhesive 110 is present between each of the layers, helping the layers become easily separated but kept in place when the sheets are stacked. The coating is also antibacterial, ensuring that that if any pathogens are present they are controlled. Each of the layers include a portion 106 free of adhesive to help peel the layers in the corner of each of the layer

The methods and systems of the present disclosure, as described above and shown in the drawings, provide for an apparatus and method of maintaining a clean work surface without the need to use chemical agents, while still protecting users from pathogen spread. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A protective work surface cover comprising:
a first layer (104) configured to attach to the work surface (108);
at least a second layer (102) removeably attached to the first layer configured to be removed once used; and
at least a third layer removeably attached to the second layer configured to be removed once used.

2. The protective work surface cover of claim 1, wherein each of the second layer and the third layer are a film.

3. The protective work surface cover of claim 1 or 2, wherein the first layer is thicker than either the second layer or the third layer.

4. The protective work surface cover of any preceding claim, wherein the first layer includes a different material or coating than the second or third layers.

5. The protective work surface cover of any preceding claim, wherein each of the layers are separated by an adhesive layer (110) or by static electricity.

6. The protective work surface cover of any preceding claim, wherein the second and third layers each include a portion (106) free of adhesive.

7. The protective work surface cover of any preceding claim, wherein each of the layers includes an antibacterial coating.

8. The protective work surface cover of any preceding claim, wherein the second and third layers each include a corner portion (106) comprising a material different than a remaining portion of each of the first and second layer.

9. The protective work surface cover of any preceding claim, wherein each of the layers are transparent.

10. An aircraft galley work surface comprising:
a substrate (108);
a first layer (104) removeably coupled to the substrate;
at least a second layer (102) removeably coupled to the first layer configured to be removed once used; and
at least a third layer removeably coupled to the second layer configured to be removed once used.

11. The work surface of claim 10, wherein the substrate is metallic.

12. The work surface of claim 11, wherein the first layer includes aluminum or stainless steel.

13. A method of cleaning a work surface comprising:
placing a protective layer stack on the work surface;
removing a top layer after use; and
exposing a subsequent layer identical to the top layer.

14. The method of claim 13, wherein the top layer is peeled away.

15. The method of claim 13 or 14, wherein the protective layer stack couples to the work surface using an adhesive.
